# EUROPÄISCHE PATENTSCHRIFT

(11) **EP 4 044 801 B1**
(45) Veröffentlichungstag und Bekanntmachung des Hinweises auf die Patenterteilung: **12.07.2023**
(21) Anmeldenummer: 20788804.1
(22) Anmeldetag: 12.10.2020
(51) Int. Cl.: A01M 7/00

(54) **METHODE UND SYSTEM FÜR DAS PFLANZENSCHUTZMITTEL-MANAGEMENT AUF EINEM AGRARWIRTSCHAFTLICHEN FELD**
METHOD AND SYSTEM FOR PLANT PROTECTION AGENT MANAGEMENT ON AN AGRICULTURAL FIELD
PROCÉDÉ ET SYSTÈME DE GESTION DE LA PROTECTION DE PLANTES DANS UN CHAMP AGRONOMIQUE

(30) Priorität: 16.10.2019 EP 19203631; 12.12.2019 EP 19215600
(43) Veröffentlichungstag der Anmeldung: 24.08.2022
(73) Patentinhaber: Bayer Aktiengesellschaft, 51373 Leverkusen (DE)
(72) Erfinder: HOFF, Simon Franz, 50259 Pulheim (DE); SENGER, Philipp, 51469 Bergisch Gladbach (DE)
(86) Internationale Anmeldenummer: PCT/EP2020/078535
(87) Internationale Veröffentlichungsnummer: WO 2021/074048

(56) Entgegenhaltungen:
- CA-A1- 3 060 517
- US-A1- 2012 168 528
- US-B2- 9 981 001

## Beschreibung

### Einleitung

Die vorliegende Erfindung betrifft eine Methode und ein System für das Pflanzenschutzmittel-Management auf einem agrarwirtschaftlichen Feld insbesondere unter Berücksichtigung gesundheitsbezogener Daten von Bestäubern. Die vorliegende Erfindung umfasst auch ein Computerprogrammprodukt sowie ein Speichermedium.

### Hintergrund der Erfindung

Heutige verfügbare digitale Landwirtschaftsprodukte helfen dem Landwirt den Einsatz von Pflanzenschutzmittel zu optimieren und insgesamt zu verringern. Beispielsweise kann das Risiko, dass bestimmte angepflanzte Nutzpflanzen von bestimmten Krankheiten befallen werden, durch Analyse von verschiedenen Daten wie z.B. dem lokalen Wetter, der Biomasse und dergleichen durch ein digitales Landwirtschaftsprodukt berechnet werden und entsprechende Handlungsanweisungen abgeleitet werden. Auch hinsichtlich des Risikos eines Schädlingsbefalls oder dem Unkrautdruck bzw. Befall auf einem agrarwirtschaftlichen Feld können digitale Landwirtschaftsprodukte wertvolle Informationen liefern.

Bienen und andere Bestäuber sind von zentraler Bedeutung für die Landwirtschaft und für die Nahrungsmittelproduktion. Durch die Bestäubung werden Pflanzen befruchtet, können sich fortpflanzen und Früchte, Samen und Blätter liefern, die wiederum eine Grundlage für die Erzeugung von Lebensmitteln sind. Die Gesundheit der Bestäuber wird aber durch ein komplexes Zusammenspiel von verschiedenen Faktoren wie Parasiten, Klimawandel, Verlust von Lebensraum, Verfügbarkeit von Nahrung, Umweltverschmutzung, invasive gebietsfremde Arten, Krankheiten oder Pflanzenschutzmittel gefährdet.

Pflanzenschutzmittel enthalten biologisch aktive Verbindungen, die dem Schutz der Pflanze dienen. Insektizide sollen die Ausbreitung von Insektenschädlingen verhindern, Herbizide Unkraut vernichten und Fungizide Pilzerkrankungen von Pflanzen bekämpfen. Damit Pflanzenschutzmittel ihre Funktion erfüllen, müssen sie gegen die Schädlinge, die sie bekämpfen sollen, biologisch aktiv sein. Da aber auch Nichtzielorganismen mit den Mitteln in Berührung kommen können, wurde ein umfassendes Regelwerk festgeschrieben, um die Sicherheit von Pflanzenschutzmitteln für Nichtzielorganismen bewerten zu können. Die Regularien stellen sicher, dass Pflanzenschutzmittel keine unvertretbaren Auswirkungen auf Nichtzielorganismen haben, also z. B. auf Honigbienen, Regenwürmer, Fische, Algen oder Vögel, wenn sie vorschriftsmäßig angewendet werden.

Mögliche Expositionswege, mit denen Bestäuber in Kontakt mit Pflanzenschutzmittel kommen können, sind: Sprührückstände auf Blüten nach Anwendung von Pflanzenschutzmitteln auf Blattwerk, Sprührückstände auf Blumen nahe behandelter Felder infolge von Verwendung/Abdrift des Sprühnebels durch Wind; Rückstände in Pollen und/oder Nektar von Kulturpflanzen, die vor der Blüte mit systemisch wirkenden Mitteln behandelt wurden, die in die Blüten eingedrungen sein können; Rückstände in Pollen und/oder Nektar von Kulturpflanzen, die bereits als Saatgut mit systemisch wirkenden Pflanzenschutzmitteln behandelt wurden; Staubdrift auf Blüten nahe behandelter Felder durch die Ausbringung unsachgemäß behandelten Saatgutes oder den Einsatz ungeeigneter Drillmaschinen; Rückstände in Honigtau, einer sehr zuckerhaltigen Ausscheidung von Blattläusen, die Bienen als Nahrungsquelle dient; Exposition, die durch die Physiologie der Kulturpflanzen/Wildpflanzen und die Wetterbedingungen bedingt ist wie z.B. Rückstände in Guttationsflüssigkeiten.

Bevor ein Produkt zugelassen wird, müssen entsprechende Studien und Risikobewertungen durchgeführt werden, die die wissenschaftlichen Kriterien der Umwelttoxikologie erfüllen. Die Verordnung (EG) Nr. 1107/2009 des Europäischen Parlaments und des Rates vom 21. Oktober 2009 schreibt beispielsweise vor, dass ein Pflanzenschutzmittel nur dann zugelassen wird, wenn es "unter Berücksichtigung der Auswirkungen auf Honigbienenlarven und das Verhalten von Honigbienen keine unvertretbaren akuten oder chronischen Auswirkungen auf das Überleben und die Entwicklung des Bienenvolks hat."

Alle Risiken, die im Zusammenhang mit bestimmten Expositionsszenarien stehen, werden im Risikobewertungsverfahren quantifiziert. Wo das Risiko ein kritisches Niveau überschreitet, wird die Umsetzung von Maßnahmen zur Risikobegrenzung gefordert. Die Maßnahmen, die zur Risikobegrenzung durchzuführen sind, werden auf dem Etikett jedes Produktes beschrieben und sind für jeden Anwender von Pflanzenschutzmitteln verpflichtend.

Standardmaßnahmen zur Risikobegrenzung bei Produkten, die für Bienen giftig sind und die mittels Versprühen angewendet werden, sind beispielsweise:
- Beschränkung der Anwendung auf die Abendstunden, nachdem die Honigbienen nicht mehr fliegen,
- Genaue Planung der Behandlungszeiten, um Pflanzenschutzmittel nicht genau dann auszubringen, wenn Blütenpflanzen in voller Blüte stehen,
- Begrenzung der Applikationshäufigkeit von Pflanzenschutzmitteln,
- Nutzung von driftmindernden Techniken, um die Ablagerung von Pflanzenschutzmittelresten auf nahe gelegene Bereiche mit blühenden Pflanzen zu vermeiden,
- Entfernung von blühendem Unkraut aus bewirtschafteten Flächen vor der Applikation (siehe dazu die Broschüre: "Die Bedeutung der Bestäuber für die Landwirtschaft"; https://www.iva.de). Stand der Technik zu diesem technischen Feld bilden unter anderem die folgenden Dokumente: CA 3 060 517 A1, US 9 981 001 B2.

### Zusammenfassung der Erfindung

Angesichts der beschriebenen Ausgangslage war es eine Aufgabenstellung der vorliegenden Erfindung die bestehenden digitalen Landwirtschaftsprodukte insbesondere im Hinblick auf das Bewahren der Bestäuber-Gesundheit im Sinne eines ganzheitlichen ökologischen und ökonomischen Ansatzes weiter zu verbessern.

In einer ersten Ausführungsform wird die Aufgabe gelöst durch ein System für das Pflanzenschutzmittel-Management auf einem agrarwirtschaftlichen Feld umfassend:
- zumindest einen Bestäuber-Sensor konfiguriert um gesundheitsbezogene Daten von Bestäubern in der Nähe eines agrarwirtschaftlichen Feldes und/oder auf einem agrarwirtschaftlichen Feld zu erfassen,
- eine Empfangseinheit
- eine Rechnereinheit; und
- eine Ausgabeeinheit.

Der zumindest eine Bestäuber-Sensor ist konfiguriert, die gesundheitsbezogenen Daten der Bestäuber über die Empfangseinheit der Rechnereinheit zur Verfügung zu stellen. Die Rechnereinheit ist konfiguriert, die gesundheitsbezogenen Daten der Bestäuber mit Referenzdaten zu vergleichen und dadurch zu ermitteln, ob ein Pflanzenschutzmittel auf das agrarwirtschaftliche Feld (im Hinblick auf die Bestäuber-Gesundheit) aufgebracht werden kann oder nicht. Die Ausgabeeinheit ist konfiguriert, zumindest die Information von der Rechnereinheit bezüglich der Ermittlung, ob ein Pflanzenschutzmittel auf das agrarwirtschaftliche Feld ausgebracht werden kann oder nicht, anzuzeigen, auszugeben oder in einem Datenspeicher zu speichern.

Anders gesagt werden durch das System gesundheitsbezogene Daten zu Bestäubern in der Nähe eines agrarwirtschaftlichen Feldes und/oder auf einem agrarwirtschaftlichen Feld erfasst und in die Entscheidungsfindung für das Pflanzenschutzmittel-Management - zusätzlich zu den ggfs. bestehenden Maßnahmen zur Risikobegrenzung und ggfs. anderen Daten - miteinbezogen. D.h. wenn festgestellt wird, dass der Gesundheitszustand der Bestäuber beispielsweise durch krankheitsbedingten Stress bzw. andere Ursachen beeinträchtigt ist, so wird dies durch das Erheben der gesundheitsbezogenen Daten erfasst und in die Entscheidungsfindung, ob ein Pflanzenschutzmittel auf das agrarwirtschaftliche Feld ausgebracht werden kann oder nicht, miteinbezogen. D.h. dass die Gesundheit der Bestäuber bei der Entscheidungsfindung weit mehr berücksichtigt wird, als durch ggfs. vorhandene Maßnahmen der Risikobegrenzung vorgeschrieben ist. Die Erfassung der gesundheitsbezogenen Daten der Bestäuber kann beispielsweise über eine (bzw. mehrere) auf dem agrarwirtschaftlichen Feld installierte Bildkamera(s) erfolgen.

In einem Beispiel wird die Rechnereinheit des Systems so konfiguriert, dass anhand des Vergleichs von den erfassten gesundheitsbezogenen Daten der Bestäuber mit den Referenzdaten der Gesundheitszustand der Bestäuber festgestellt werden kann und dadurch ermittelt werden kann, ob ein Pflanzenschutzmittel auf das agrarwirtschaftliche Feld aufgebracht werden kann oder nicht.

Anders gesagt, werden die gesundheitsbezogenen Informationen über die Bestäuber beispielsweise mit in der Rechnereinheit vorliegenden gesundheitsbezogenen Vergleichsdaten von Bestäubern verglichen und daraus abgeleitet, wie der Gesundheitszustand der Bestäuber in der Nähe eines agrarwirtschaftlichen Feldes und/oder auf einem agrarwirtschaftlichen Feld ist. Wenn der Gesundheitszustand gut ist, kann ein Pflanzenschutzmittel auf das Feld unter Berücksichtigung von ggfs. vorhandenen Maßnahmen der Risikobegrenzung aufgebracht werden. Wenn der Gesundheitszustand nicht optimal ist, dann wird durch die Ausgabeeinheit beispielsweise angezeigt, dass kein Pflanzenschutzmittel auf das Feld aufgebracht werden kann.

In einem Beispiel bezieht sich das System auf Bienen und insbesondere Honigbienen (*Apis mellifera*) als Bestäuber.

Bei Kulturpflanzen, die auf biotische Bestäubung angewiesen sind, wie Kernobst (z.B. Äpfel und Birnen) und Steinobst, fungiert die Honigbiene als wichtigster Bestäuber; allerdings tragen auch Einsiedlerbienen, Hummeln und andere Insekten zur Bestäubung bei.

In einem Beispiel ist der zumindest eine Bestäuber-Sensor des Systems an einer Bienennisthöhle angebracht und/oder liegt in einer Bienennisthöhle vor. Die Bienennisthöhle befindet sich in der Nähe eines agrarwirtschaftlichen Feldes und/oder auf einem agrarwirtschaftlichen Feld.

In anderen Worten ist der zumindest eine Bestäuber-Sensor in der Nähe des Bienenstocks angebracht, damit möglichst umfangreiche gesundheitsbezogene Daten idealerweise zu allen Entwicklungsstadien der Biene erfasst werden können. Daraus kann ein möglichst genaues Bild des Gesundheitszustandes der Bienen erhoben werden. Idealerweise werden mehrere Bestäuber-Sensoren pro Bienennisthöhle angebracht und es werden gesundheitsbezogene Daten von möglichst allen Bienennisthöhlen gesammelt, die in der Nähe des agrarwirtschaftlichen Feldes bzw. auf dem agrarwirtschaftlichen Feld vorhanden sind.

In einem weiteren Beispiel sind die durch den zumindest einen Bestäuber-Sensor ermittelten gesundheitsbezogenen Daten ausgewählt aus der Gruppe von: Bruttemperatur, Luftfeuchtigkeit in der Bienennisthöhle, Gewicht der Bienen in der Bienennisthöhle, Bildanalyse der Brut, Bildanalyse des Flugverhaltens der Bienen, Bienenverkehr am Ein-/Ausgang der Bienennisthöhle, akustische Signale von Bienen, elektromagnetische Signale und Gase in der Bienennisthöhle.

Anders gesagt werden die gesundheitsbezogenen Bienen direkt im oder an der Bienennisthöhle erhoben und liefern dadurch Informationen direkt von dem Bienenvolk, welches aus 40'000 bis 60'000 individuellen Bienen bestehen kann. Die gesundheitsbezogenen Daten werden auf Grund der Anzahl der Bienen sehr aussagekräftig.

In einem Beispiel ist der zumindest eine Bestäuber-Sensor eine Kamera. Die Kamera ist konfiguriert, zumindest ein Bild der Brut innerhalb einer Bienennisthöhle und/oder des Ein-/Ausgangs der Bienennisthöhle zu erstellen.

Durch eine Bilderfassung in bzw. an der Bienennisthöhle können eine Vielzahl von Informationen wie beispielsweise das Flugverhalten oder Informationen zu Schädlingen, etc. erhoben werden, die wiederum Aufschluss über den Gesundheitszustand des Bienenvolkes in der Bienennisthöhle geben.

In einem Beispiel wird das zumindest eine Bild über die Empfangseinheit der Rechnereinheit zur Verfügung gestellt und die Rechnereinheit ist konfiguriert, eine Bildanalyse von dem zumindest einem Bild durchzuführen.

Die Bildanalyse auf der Rechnereinheit ermöglicht es, automatisiert Bildinformationen zu den Bienen und ihrer unmittelbaren Nistumgebung zu analysieren, um daraus Rückschlüsse auf den Gesundheitszustand der Bienen abzuleiten. Insbesondere erfolgten die Bilderfassung und Bildanalyse kontinuierlich über längere Zeiträume hinweg. So kann beispielsweise durch den Vergleich von Bildern der Nistumgebung über einen längeren Zeitraum hinweg, genaue Kenntnis des Gesundheitszustandes der Brut erlangt werden.

In einem Beispiel umfasst die Bildanalyse der Rechnereinheit die Nutzung von zumindest einem Algorithmus für maschinelles Lernen.

Solche Algorithmen unterstützen eine vollautomatisierte Auswertung der Daten, die eine beschleunigte Entscheidungsfindung ermöglichen.

In einem weiteren Beispiel umfasst das System weiter zumindest einen Umwelt-Sensor, der konfiguriert ist, umweltbezogene Daten in der Nähe und/oder auf einem agrarwirtschaftlichen Feld zu erfassen. Der zumindest eine Umwelt-Sensor ist konfiguriert, die umweltbezogenen Daten über die Empfangseinheit der Rechnereinheit zur Verfügung zu stellen und die Rechnereinheit ist konfiguriert, die umweltbezogenen Daten zusammen mit den gesundheitsbezogenen Daten der Bestäuber mit Referenzdaten zu vergleichen und dadurch zu ermitteln, ob ein Pflanzenschutzmittel auf das agrarwirtschaftliche Feld aufgebracht werden kann oder nicht.

Weitere umweltbezogene Daten, die von Bestäuber-Sensoren nicht erfasst werden, können einen Einfluss auf die Bestäuber-Gesundheit haben. Beispielsweise beeinflusst das lokale Wetter um einen Bienennistplatz die Nahrungssuche der Bienen. Durch einen Umwelt-Sensor in der Nähe der Bienennisthöhle kann das lokale Wetter erfasst werden und für die Entscheidungsfindung berücksichtigt werden.

In einem Beispiel sind die durch den zumindest einen Umwelt-Sensor ermittelten umweltbezogenen Daten ausgewählt aus der Gruppe von: Wetterdaten und Wettervorhersagedaten in der Nähe des agrarwirtschaftlichen Feldes und/oder vom agrarwirtschaftlichen Feld, Informationen zum Wachstumsstadium und der Blühphase des sich in der Nähe des agrarwirtschaftlichen Feldes und/oder auf dem agrarwirtschaftlichen Feld befindenden Pflanzenbestands, Schädlingsdruck und/oder Schädlingsbefall der auf dem agrarwirtschaftlichen Feld angepflanzten Nutzpflanzen, Krankheitsdruck und/oder Krankheitsbefall der auf dem agrarwirtschaftlichen Feld angepflanzten Nutzpflanzen, Unkrautdruck und/oder Befall auf dem agrarwirtschaftlichen Feld.

In einem weiteren Beispiel umfasst das System auch eine Pflanzenschutzmittelkontrolleinheit. Dabei ist die Ausgabeeinheit so konfiguriert, dass die Pflanzenschutzmittelkontrolleinheit aktiviert wird, wenn die Rechnereinheit ermittelt hat, dass ein Pflanzenschutzmittel auf das agrarwirtschaftliche Feld ausgebracht werden kann.

Anders gesagt, kann das System nach der Entscheidungsfindung, ob ein Pflanzenschutzmittel aufgebracht werden kann, vollautomatisiert beispielsweise entsprechende Pflanzenschutzmittel-Sprayer anweisen, das agrarwirtschaftliche Feld mit den entsprechenden Pflanzenschutzmitteln zu besprühen. Dadurch ist eine Interaktion mit einem Landwirt u.U. nicht mehr erforderlich.

In einer zweiten Ausführungsform wird die Aufgabe gelöst durch eine Methode für das Pflanzenschutzmittel-Management auf einem agrarwirtschaftlichen Feld umfassend:
(a) Erfassen von gesundheitsbezogenen Daten von Bestäubern in der Nähe eines agrarwirtschaftlichen Feldes und/oder auf einem agrarwirtschaftlichen Feld mit zumindest einem Bestäuber-Sensor;
(b) Weiterleiten der erfassten gesundheitsbezogenen Daten über die Empfangseinheit an die Rechnereinheit;
(c) Vergleichen der gesundheitsbezogenen Daten der Bestäuber mit Referenzdaten durch die Rechnereinheit und dadurch ermitteln, ob ein Pflanzenschutzmittel auf das agrarwirtschaftliche Feld aufgebracht werden kann oder nicht,
(d) Anzeigen und/oder Ausgeben einer Information von der Ausgabeeinheit bezüglich der von der Rechnereinheit ermittelten Information, ob ein Pflanzenschutzmittel auf das agrarwirtschaftliche Feld ausgebracht werden kann oder nicht und/oder Speichern dieser Information in einem Datenspeicher.

Eine weitere Ausführungsform betrifft ein Computerprogrammprodukt zur Steuerung von einem System gemäß erster Ausführungsform, das bei Ausführung durch einen Prozessor so konfiguriert ist, die Methode gemäß der zweiten Ausführungsform auszuführen.

Eine weitere Ausführungsform betrifft ein Speichermedium, welches das Computerprogrammprodukt gespeichert hat.

### Kurze Beschreibung der Figuren

Ausgestaltungen der Erfindung werden nachfolgend durch Bezugnahme auf die folgenden Figuren beschrieben:
Figur 1 zeigt schematisch ein System für das Pflanzenschutzmittel-Management auf einem agrarwirtschaftlichen Feld.
Figur 2 zeigt schematisch eine Methode für das Pflanzenschutzmittel-Management auf einem agrarwirtschaftlichen Feld.
Figur 3 zeigt schematisch das System für das Pflanzenschutzmittel-Management mit einer Bienennisthöhle.
Figur 4 zeigt ein konkretes Beispiel des Systems mit einem agrarwirtschaftlichen Feld umgeben von drei Bienennisthöhlen.
Figur 5 zeigt ein konkretes Beispiel der Entscheidungsfindung des Systems bzgl. eines agrarwirtschaftlichen Feldes. In der Nähe des Feldes befinden sich drei Bienennisthöhlen.
Figur 6 zeigt ein weiteres konkretes Beispiel der Entscheidungsfindung des Systems, welches in Figur 5 schon beschrieben wurde.
Figur 7 zeigt ein weiteres konkretes Beispiel der Entscheidungsfindung des gleichen Systems wie in Figur 5 und 6 gezeigt.

### Detaillierte Beschreibung

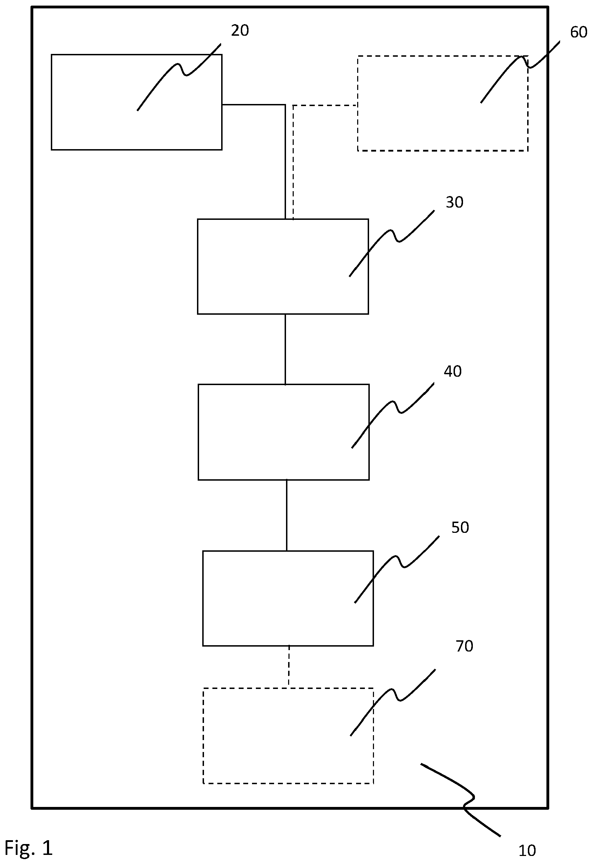

Die Figur 1 zeigt schematisch ein System 10 für das Pflanzenschutzmittel-Management auf einem agrarwirtschaftlichen Feld. Das System 10 umfasst zumindest einen Bestäuber-Sensor 20 konfiguriert, um gesundheitsbezogene Daten von Bestäubern in der Nähe und/oder auf einem agrarwirtschaftlichen Feld zu erfassen; eine Empfangseinheit 30; eine Rechnereinheit 40; und eine Ausgabeeinheit 50. Der zumindest eine Bestäuber-Sensor ist konfiguriert, die gesundheitsbezogenen Daten der Bestäuber über die Empfangseinheit der Rechnereinheit zur Verfügung zu stellen. Die Rechnereinheit wiederum ist konfiguriert, die gesundheitsbezogenen Daten der Bestäuber mit Referenzdaten zu vergleichen und dadurch zu ermitteln, ob ein Pflanzenschutzmittel (im Hinblick auf die Bestäuber-Gesundheit) auf das agrarwirtschaftliche Feld aufgebracht werden kann oder nicht. Die Ausgabeeinheit ist konfiguriert, zumindest die Information von der Rechnereinheit bezüglich der Ermittlung, ob ein Pflanzenschutzmittel auf das agrarwirtschaftliche Feld ausgebracht werden kann oder nicht, anzuzeigen, auszugeben oder in einem Datenspeicher zu speichern.

In einem Beispiel ist der zumindest eine Bestäuber-Sensor ausgewählt von der Gruppe aus: Kamera, Thermokamera, Temperatursensor, Infrarot-Sensor z.B. eine IR-Kamera, Luftfeuchtigkeitssensor, Gewichtssensor, Geruchssensor, Gassensor, LIDAR Sensor, Mikrophon, Bewegungsdetektor, Zähldetektor und/oder dergleichen. Die Informationen von dem Bestäuber-Sensor können an die Empfangseinheit und die Rechnereinheit über verschiedene, dem Fachmann an sich bekannte Übertragungstechniken wie z.B. über Kabel oder kabellos z.B. über Netzwerke wie PAN (z. B. Bluetooth), LAN (z. B. Ethernet); WAN (z. B. ISDN), GAN (z.B. das Internet), LPWAN oder LPN (wie z.B. SigFox, LoRAWAN, etc.), Mobilfunknetzwerke oder andere übertragen werden.

In einem Beispiel umfasst der Sensor eine Sendeeinheit zur kabellosen Übertragung von Informationen.

Das System umfasst weiter eine Empfangseinheit, eine Rechnereinheit und eine Ausgabeeinheit. Es ist denkbar, dass die genannten Einheiten Bestandteile eines einzigen Computersystems sind; es ist aber auch denkbar, dass die genannten Einheiten Bestandteile von mehreren separaten Computersystemen sind, die über ein Netzwerk miteinander verbunden sind, um Daten und/oder Steuersignale von einer Einheit zu einer anderen Einheit zu übermitteln. Es ist beispielsweise möglich, dass die Rechnereinheit in der "Cloud" liegt und die in dieser Anmeldung beschriebenen Analyseschritte durch diese Rechnereinheit in der "Cloud" durchgeführt werden. Ein "Computersystem" ist ein System zur elektronischen Datenverarbeitung, das mittels programmierbarer Rechenvorschriften Daten verarbeitet. Ein solches System umfasst üblicherweise einen "Computer", diejenige Einheit, die einen Prozessor zur Durchführung logischer Operationen umfasst, sowie eine Peripherie. Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Monitor (Bildschirm), Drucker, Scanner, Maus, Tastatur, Laufwerke, Kamera, Mikrofon, Lautsprecher etc. Auch interne Anschlüsse und Erweiterungskarten gelten in der Computertechnik als Peripherie. Computersysteme von heute werden häufig in Desktop-PCs, Portable PCs, Laptops, Notebooks, Netbooks und Tablet-PCs und so genannte Handhelds (z.B. Smartphone) unterteilt; alle diese Systeme können zur Ausführung der Erfindung genutzt werden.

In einem Beispiel ist die Empfangseinheit konfiguriert, die Informationen von dem zumindest einen Bestäuber-Sensor (bzw. dem zumindest einen Umwelt-Sensor) zum empfangen und an die Rechnereinheit weiterzugeben. Die Empfangseinheit kann weitere elektronische Elemente wie z.B. eine Eingabeeinheit wie beispielsweise eine Eingabetastatur, Maus, Mikrofon und/oder dergleichen umfassen, über die beispielsweise eine Anfrage, ob ein Pflanzenschutzmittel auf das agrarwirtschaftliche Feld aufgebracht werden kann oder nicht, gestartet werden kann. Abfragen können in regelmäßigen Zeitabständen (z.B. Tage oder jeweils jede Woche) erfolgen beispielsweise sobald ein Landwirt erkannt hat, dass das Auftragen eines Pflanzenschutzmittels auf das agrarwirtschaftliche Feld notwendig ist.

In einem Beispiel dient die Rechnereinheit zur Steuerung der Empfangseinheit, der Koordinierung der Daten- und Signalflüsse zwischen verschiedenen Einheiten, des Vergleichs der Daten mit Referenzdaten sowie der Entscheidungsfindung, ob Pflanzenschutzmittel auf das agrarwirtschaftliche Feld aufgetragen werden können oder nicht. Es ist denkbar, dass mehrere Rechnereinheiten vorhanden sind die miteinander entsprechend notwendige Daten austauschen.

Nach einem Beispiel ist die Rechnereinheit des Systems so konfiguriert, dass anhand der erfassten gesundheitsbezogenen Daten der Bestäuber und Referenzdaten der Gesundheitszustand der Bestäuber festgestellt werden kann und dadurch ermittelt werden kann, ob ein Pflanzenschutzmittel auf das agrarwirtschaftliche Feld aufgebracht werden kann oder nicht. D.h. dass beispielsweise Daten zu der Temperatur in der Bienennisthöhle, der relativen Luftfeuchtigkeit in der Bienennisthöhle und dem Gewicht des Bienenstocks in der Bienennisthöhle durch Bestäuber-Sensoren gesammelt werden und die Rechnereinheit diese Daten mit Referenzdaten vergleicht. Wenn sich die erhobenen Daten in einem Bereich befinden, der für gesunde Bienen üblich ist (d.h. beispielsweise bzgl. der Bruttemperatur in der Bienennisthöhle zwischen 32 und 36 Grad Celsius ist und die relative Luftfeuchtigkeit einen Wert zwischen 45 und 65 % hat und das Gewicht des Bienenstocks in der Bienennisthöhle während der Vegetationsperiode kontinuierlich zugenommen hat), dann kann ein Pflanzenschutzmittel auf ein agrarwirtschaftliches Feld - im Hinblick auf den Erhalt einer optimalen Bestäuber- bzw. Bienengesundheit - aufgebracht werden. Falls sich gewisse Parameter nicht in einem für gesunde Bienen üblichen Bereich befinden, wäre die Empfehlung, kein Pflanzenschutzmittel aufzubringen, um die Gesundheit der Bienen unter Umständen nicht weiter zu belasten und Nachforschungen anzustellen, warum gewisse Parameter vom Normalwert bei den Bienen abweichen. Andere gesundheitsbezogene Informationen, die von Bestäuber-Sensoren erfasst werden können, aber in diesem Abschnitt nicht besprochen sind, eignen sich - wie nachfolgend besprochen - auch bzw. alternativ zur Beurteilung bzw. zur genaueren Beurteilung der Bestäuber-Gesundheit.

In einem weiteren Beispiel ist die Ausgabeeinheit ein digital arbeitendes Übermittlungs-, Melde- und Warnsystem, das geeignet ist, zumindest die Entscheidung, ob Pflanzenschutzmittel auf das agrarwirtschaftliche Feld aufgetragen werden können oder nicht mittels Ton, Licht, Vibrationen, elektrischer Signale, elektromagnetischer Impulse, numerischer Ausgaben und dergleichen z.B. über einen Monitor darzustellen oder an weitere Geräte, beispielsweise weitere Ausgaben, Leitsysteme, Terminals, Pflanzenschutzmittelkontrolleinheit, mobile Endgeräte und dergleichen zu übermitteln bzw. die Information in einem Datenspeicher zu speichern.

In einem weiteren Beispiel beziehen sich Referenzdaten auf der Rechnereinheit auf literaturbekannte gesundheitsbezogene Daten von Bestäubern. So ist bekannt, dass eine Bruttemperatur von 33 bis 36 Grad Celsius in der Bienennisthöhle während des Frühjahrs/Sommers für ein gesundes Bienenvolk üblich ist. Wenn Bienen bei Temperaturen von 32 Grad heranwachsen, dann kehren viele der adulten Bienen nicht mehr in die Bienennisthöhle zurück (Tautz J. et al., PNAS June 10, 2003 100 (12) 7343-7347). Wird es im Sommer in den Beuten beispielsweise zu heiß (d.h. über 36 Grad Celsius), so sind die Bienen gezwungen, viel Zeit und Energie in das Kühlen (Befeuchten und Belüften) zu investieren, was sich negativ auf den allgemeinen Gesundheitszustand auswirkt, da die Aktivitäten viel Energie kosten und sehr zeitaufwändig sind und die Zeit für andere wichtige Aufgaben fehlt. Die relative Luftfeuchtigkeit in einer Bienennisthöhle schwankt zwischen 45 und 65 %. Bei zu hoher Feuchtigkeit kann es zu Wachstum von pathogenen Keimen kommen und somit zu einer direkten Belastung der Gesundheit der Bienen. Eine hohe Luftfeuchtigkeit schädigt die Bienen zusätzlich durch die vermehrte Fortpflanzung und eine erhöhte Lebenserwartung etlicher Parasiten. Bei geringerer Luftfeuchte sinkt i.d.R. die Lebenserwartung der Parasiten und die Fortpflanzungsaktivitäten nehmen ab. D.h. die Wahrscheinlichkeit an Parasiten zu erkranken, ist bei reduzierter Luftfeuchtigkeit geringer. Hinsichtlich des Gewichts eines Bienenvolkes in einer Bienennisthöhle ist bekannt, dass bei einem gesunden Bienenvolk ein ständiger Gewichtszuwachs von Frühjahr über die Sommerperiode stattfindet. D.h. wenn die Gewichtskurve abnimmt, dann kann das ein Anzeichen dafür sein, dass der Gesundheitszustand des Bienenvolkes nicht optimal ist.

Als Pflanzenschutzmittel im Sinne der vorliegenden Anmeldung werden Fungizide, Herbizide und/oder Insektizide verstanden.

Nach einem weiteren Beispiel sind die Bestäuber Insekten vorzugsweise aus der Gruppe von Schwebfliegen, Einsiedlerbienen, Hummeln, Honigbienen. Weiter bevorzugt sind als Bestäuber Bienen und insbesondere Honigbienen (*Apis mellifera*)*.* Die Honigbienen leben in einem Staat, der als Maximum etwa zur Sommersonnenwende 40.000 bis 60.000 Bienen beherbergt. Die meiste Zeit des Jahres besteht das Bienenvolk nur aus Weibchen: aus der Königin, die als einzige Eier legt (bis zu 2000 Stück am Tag), und aus den unfruchtbaren Arbeiterinnen, die Pollen und Nektar sammeln, die Larven aufziehen und den Stock verteidigen. Ab dem Frühsommer werden auch laufend einige hundert männliche Bienen (Drohnen) aufgezogen. Als Bienenstock wird eine vom Imker zur Verfügung gestellte künstliche Nisthöhle (Behausung) mitsamt dem darin befindlichen Volk von Honigbienen bezeichnet. Die Behausung allein wird "Beute" genannt. In dieser Anmeldung wird dafür überwiegend der synonyme Begriff "Bienennisthöhle" verwendet.

Nach einem Beispiel ist der zumindest eine Bestäuber-Sensor an einer Bienennisthöhle angebracht und/oder liegt in einer Bienennisthöhle vor. Die Bienennisthöhle befindet sich in der Nähe eines agrarwirtschaftlichen Feldes und/oder auf einem agrarwirtschaftlichen Feld.

Dem Fachmann ist allgemein bekannt wie er Bestäuber-Sensoren an bzw. in der Bienennisthöhle anbringen kann.

In einem Beispiel umfasst der zumindest eine Bestäuber-Sensor ein Positionsbestimmungssystem. Ein bekanntes Positionsbestimmungssystem ist ein Satellitennavigationssystem wie beispielsweise NAVSTAR GPS, GLONASS, Galileo oder Beidou. Da sich die Abkürzung GPS (Globales Positionsbestimmungssystem) in der Umgangssprache als generische Bezeichnung für alle Satellitennavigationssysteme etabliert hat, wird nachfolgend der Begriff GPS als Sammelbezeichnung für alle Positionsbestimmungssysteme verwendet. Da die Bienennisthöhlen häufig stationär über einen längeren Zeitraum an einer Stelle aufgestellt werden, ist es denkbar, bereits zum Zeitpunkt der Aufstellung der Bienennisthöhle die Geokoordinaten zu bestimmen. Es kann zum Beispiel sein, dass eine Bienennisthöhle an einem Ort aufgestellt und dann mit einem (separaten) GPS-Sensor die Geokoordinaten des Ortes der aufgestellten Bienennisthöhle bestimmt werden. Denkbar ist auch, dass die Geokoordinaten eines Ortes, an dem eine Bienennisthöhle aufgestellt werden soll, bestimmt werden, und dann die Bienennisthöhle an der entsprechend bestimmten Position aufgestellt wird. Die Lage der Bienennisthöhle kann beispielsweise in einer Datenbank und/oder auf einer digitalen Karte verzeichnet sein/werden. Es kann sein, dass ein Bestäuber-Sensor einer Bienennisthöhle über eine eindeutige Kennung (zum Beispiel eine Identifikationsnummer) verfügt. Übermittelt ein Bestäuber-Sensor dieser Bienennisthöhle Informationen zu der Rechnereinheit, authentifiziert er sich z.B. mittels der eindeutigen Kennung. In einer Datenbank kann hinterlegt sein, an welcher Position, welcher Bestäuber-Sensor mit welcher Kennung aufgestellt ist. Dadurch kann durch Abfragen der Datenbank anhand der eindeutigen Kennung ebenfalls die Position der Bienennisthöhle ermittelt werden.

In einem Beispiel werden mehrere unterschiedliche Bestäuber-Sensoren für eine Bienennisthöhle installiert. Es gibt kommerzielle Anbieter von Multisensoren-Hardware für Bienennisthöhlen, die Systeme anbieten, die verschiedene Sensoren umfassen wie beispielsweise: Bienenzähler (ankommende und abgehende Bienen werden separat gezählt), Bienenklassifizierung (Drone, Arbeiter), Temperatur, Luftfeuchtigkeit, Gewicht, etc. Kommerzielle Anbieter sind z.B. Lowland Electronics (ApiSCAN), Arnia, Apis Tech, Emsystech.

In einem Beispiel werden alle sich in der Nähe und/oder auf dem agrarwirtschaftlichen Feld befindlichen Bienennisthöhlen mit zumindest einem Bestäuber-Sensor und vorzugsweise jede Bienennisthöhle mit mehreren Bestäuber-Sensoren ausgestattet. Dabei bedeutet der Ausdruck "in der Nähe eines agrarwirtschaftlichen Feldes" gemäß einer Ausführungsform der vorliegenden Erfindung, dass sich die Bestäuber in einer räumlichen Entfernung zum agrarwissenschaftlichen Feld befinden, in der sie das agrarwissenschaftliche Feld durch eigene Anstrengung erreichen können. Die Bestäuber dienen insbesondere der auf dem agrarwissenschaftlichen Feld angebauten Pflanzen. In einer anderen Ausführungsform bedeutet der Ausdruck "in der Nähe eines agrarwirtschaftlichen Feldes", dass sich die Bestäuber in einer räumlichen Entfernung zum agrarwirtschaftlichen Feld befinden, bei der die Ausbringung eines Pflanzenschutzmittels auf dem agrarwirtschaftlichen Feld eine Auswirkung auf die Bestäuber ausüben kann. Beide Entfernungen lassen sich empirisch ermittelt. Vorzugsweise beträgt die Distanz zu dem Feld 2 km, noch bevorzugter 1 km und insbesondere bevorzugt 500 m. Im Sinne der Anmeldung bezeichnet der Begriff "agrarwirtschaftliches Feld", dasjenige Feld auf den Nutzpflanzen angebaut werden und für die eine Entscheidung gefällt werden muss, ob ein Pflanzenschutzmittel - angesichts des Erhalts der Bestäuber-Gesundheit - aufgetragen werden soll oder nicht.

In einem Beispiel werden mehrere Bienennisthöhlen in der Nähe bzw. auf dem agrarwirtschaftlichen Feld mit Bestäuber-Sensoren überwacht. Falls festgestellt wird, dass die Bienengesundheit bei der Mehrheit der Bienenvölker normal ist, jedoch bei einzelnen Bienenvölkern nicht optimal ist, so kann die Rechnereinheit eine Entscheidung vorgeben, dass ein Pflanzenschutzmittel auf das agrarwirtschaftliche Feld partiell aufgetragen werden kann, unter Einhaltung eines Sicherheitsabstandes zu denjenigen Bienenvölkern, deren Gesundheit als nicht optimal bewertet wurde. Der Sicherheitsabstand kann zwischen 1 bis 3 km betragen.

In einem weiteren Beispiel kann die Entscheidung lauten, dass kein Pflanzenschutzmittel auf das agrarwirtschaftliche Feld aufgetragen wird, wenn die Gesundheit der Mehrheit der Bienenvölker in der Nähe bzw. auf dem agrarwirtschaftlichen Feld nicht optimal ist. Dies kann auch von weiteren Daten (wie z.B. der Unkrautdruck, Schädlingsdruck, Krankheitsdruck auf dem Feld) abhängig gemacht werden, die ggfs. ein partielles Auftragen von Pflanzenschutzmittel auf dem agrarwirtschaftlichen Feld mit entsprechendem Sicherheitsabstand zu denjenigen Bienenvölkern, deren Gesundheit als nicht optimal bewertet wurde, rechtfertigen kann.

Nach einem Beispiel sind die ermittelten gesundheitsbezogenen Daten von dem zumindest einen Bestäuber-Sensor ausgewählt aus der Gruppe von: Bruttemperatur, Luftfeuchtigkeit in der Bienennisthöhle, Gewicht der Bienen in der Bienennisthöhle, Bildanalyse der Brut, Bildanalyse des Flugverhaltens der Bienen, Bienenverkehr am Ein-/Ausgang der Bienennisthöhle, akustische Signale von Bienen, elektromagnetische Signale und Gase in der Bienennisthöhle.

In einem Beispiel bewegt sich die optimale Bruttemperatur in einem Temperaturbereich von 32 bis 36 Grad Celsius während des Frühjahrs/Sommers.

In einem weiteren Beispiel ist die optimale relative Luftfeuchtigkeit in der Bienennisthöhle zwischen 45 und 65 % während des Frühjahrs/Sommers.

In einem weiteren Beispiel nimmt das Gewicht der Bienen bei einem gesunden Bienenvolk in der Bienennisthöhle im Verlaufe des Frühjahres bis zur Sommerperiode kontinuierlich zu.

In einem Beispiel werden ausschließlich die Temperatur, relative Luftfeuchtigkeit und das Gewicht gemessen um den Gesundheitszustand der Bienen innerhalb einer Bienennisthöhle zu bewerten.

In einem Beispiel wird das Gewicht der Bienen in der Bienennisthöhle durch Messung des Gewichts der gesamten Bienennisthöhle hergeleitet.

Ein weiteres Beispiel umfasst die Bildanalyse der Brut eine Klassifizierung des Inhalts der Zellen der Waben beispielsweise nach "leer", "Ei", "kleine Larve", "mittlere Larve", "große Larve", "bedeckte Zelle", "schlüpfende Larve", "Nektar", "Pollen", "tote Larve". Über die jeweiligen Anteile der klassifizierten Zellen können Rückschlüsse über die Gesundheit des Bienenvolkes getroffen werden. Zur Bildanalyse können beispielsweise Verfahren der Mustererkennung oder auch selbstlernende Systeme (z.B. künstliche neuronale Netzwerke) eingesetzt werden.

Ein weiteres Beispiel umfasst die Bildanalyse des Flugverhaltens der Bienen insbesondere am Ein-/Ausgang der Bienenhöhle. D.h. es wird beispielsweise gezählt, wie viele Bienen in die Beute durch den Eingang hineinfliegen und wie viele Bienen aus der Beute herausfliegen. Beispielsweise kann durch eine Bildanalyse erfasst werden, ob Bienen mit Pollen zurückkehren und ob sie insgesamt ein ruhiges Flugverhalten beim Ein- und Ausflug zeigen. Eine solche Bildanalyse kann auch ermöglichen, dass man Parasiten wie beispielsweise die Varroa Milbe frühzeitig erkennen kann (Chazette, L et al., Basic Alghorithms for Bee Hive Monitoring and Laser-based Mite Control, IEEE Symposium Series on Computational Intelligence; Conference Paper, December 2016; DOI: 10.1109/SSCI.2016.7850001). Diese Informationen können zur Einschätzung des Gesundheitszustandes des Bienenvolkes in der jeweiligen Beute verwendet werden. Das Zählen der Bienen am Ein-/Ausgang der Höhle kann auch über andere Technologien wie z.B. IR-Sensoren durchgeführt werden.

Ein weiteres Beispiel umfasst das Erfassen von akustischen Signalen von Bienen. Beispielsweise ist bekannt, dass sich die akustischen Signale des Bienenvolkes in einer Bienennisthöhle verändern, wenn die Bienen von Parasiten befallen sind oder erkrankt sind (Bromenshenk J. Jerry et al., Biosensors 2015, 5, 678-711).

Ein weiteres Beispiel umfasst das Erfassen von elektromagnetischen Signalen in der Bienennisthöhle. Es ist bekannt, dass elektromagnetische Felder, die z.B. durch den Mobilfunk erzeugt werden, die Gesundheit der Bienen beeinflussen kann.

Ein weiteres Beispiel umfasst das Erfassen von Gasen in der Bienennisthöhle wie z.B. CO₂, O₂, NO₂, Ethanol, NH₃, CO, Methan etc. Es ist bekannt, dass z.B. der CO₂ und der O₂-Gehalt des Bienenvolkes in einer Beute Informationen über den Gesundheitszustand enthalten kann. Beispielsweise können Fluktuationen beim CO₂-Anteil bzw. ein geringer CO₂-Anteil auf einen Verlust von Bienen (auf Grund von Krankheiten, Parasiten etc.) hinweisen (Edwards-Murphy F. et al, Computers and Electronics in Agriculture 124, 2016, 211-219).

Nach einem Beispiel ist der zumindest eine Bestäuber-Sensor eine Kamera, die konfiguriert ist, zumindest ein Bild von der Brut innerhalb einer Bienennisthöhle und/oder ein Bild des Ein-/Ausgangs der Bienennisthöhle zu erstellen.

Nach einem weiteren Beispiel wird das zumindest eine Bild über die Empfangseinheit der Rechnereinheit zur Verfügung gestellt und die Rechnereinheit ist konfiguriert, eine Bildanalyse von dem zumindest einen Bild durchzuführen.

Nach einem weiteren Beispiel umfasst die Bildanalyse die Nutzung von zumindest einem Algorithmus für maschinelles Lernen. Es ist denkbar, dass wie oben im Zusammenhang mit der Bildanalyse der Brut beschrieben, beispielsweise Verfahren der Mustererkennung oder auch selbstlernende Systeme (z.B. künstliche neuronale Netzwerke) eingesetzt werden (siehe beispielsweise Astha Tiwari, A deep learning approach to recognizing bees in video analysis of bee traffic, 2018, All Graduate theses and Dissertations; 7076, "https://digitalcommons.usu.edu/etd/7076".

Nach einem Beispiel umfasst das System weiter zumindest einen Umwelt-Sensor 60, der konfiguriert ist, umweltbezogene Daten in der Nähe und/oder auf einem agrarwirtschaftlichen Feld zu erfassen, wobei, der zumindest eine Umwelt-Sensor konfiguriert ist, die umweltbezogenen Daten über die Empfangseinheit der Rechnereinheit zur Verfügung zu stellen, wobei, die Rechnereinheit konfiguriert ist, die umweltbezogenen Daten zusammen mit den gesundheitsbezogenen Daten der Bestäuber mit Referenzdaten zu vergleichen und dadurch zu ermitteln, ob ein Pflanzenschutzmittel auf das agrarwirtschaftliche Feld aufgebracht werden kann oder nicht.

In einem Beispiel kann der Umwelt-Sensor beispielsweise eine Wetterstation sein, die beispielsweise außerhalb einer Bienennisthöhle angebracht wird, in der auch zumindest ein Bestäuber-Sensor montiert wird. Es hat sich gezeigt, dass das lokale Wetter um eine Bienennisthöhle einzelne Parameter wie beispielsweise die relative Luftfeuchte in der Beute oder das Flugverhalten der Bienen etc. beeinflusst.

In einem weiteren Beispiel ist der zumindest eine Umwelt-Sensor eine Schnittstelle zu weiteren Datenbanken, die lokale Information zum agrarwirtschaftlichen Feld bzw. zu dessen Umgebung beinhalten. Solche Datenbanken können Wetterdaten, Satellitendaten, Bodendaten etc. beinhalten. Es ist auch möglich, dass die Datenbank Einträge enthält, die ein Landwirt im Laufe der Vegetationsperiode durch Auskundschaftungen in der Nähe bzw. auf dem agrarwirtschaftlichen Feld zusammengetragen hat (Scouting-Datenbank).

In einem weiteren Beispiel ist der zumindest eine Umwelt-Sensor ein Sensor, der auf dem agrarwirtschaftlichen Feld in unmittelbarer Nähe zu den Nutzpflanzen angebracht wird. Dieser Sensor kann zumindest eine Kamera sein, die verschiedene Daten zu den in der Nähe und/oder auf dem agrarwirtschaftlichen Feld befindenden Pflanzenbestand sammelt und über dem Fachmann an sich bekannte Übertragungstechniken z.B. über Funk zu der Empfangseinheit weiterleitet.

Nach einem Beispiel sind die durch den zumindest einen Umwelt-Sensor ermittelten umweltbezogenen Daten ausgewählt aus der Gruppe von: Wetterdaten und Wettervorhersagedaten in der Nähe und/oder vom agrarwirtschaftlichen Feld, Informationen zum Wachstumsstadium und der Blühphase der in der Nähe und/oder auf dem agrarwirtschaftlichen Feld befindenden Pflanzenbestands, Schädlingsdruck und/oder Schädlingsbefall der auf dem agrarwirtschaftlichen Feld angepflanzten Nutzpflanzen, Krankheitsdruck und/oder Krankheitsbefall der auf dem agrarwirtschaftlichen Feld angepflanzten Nutzpflanzen, Unkrautdruck und/oder Befall auf dem agrarwirtschaftlichen Feld.

In einem Beispiel ist der zumindest eine Umwelt-Sensor in der Nähe und/oder auf dem agrarwirtschaftlichen Feld angebracht und vorzugsweise eine Kamera. Durch Bildanalyse der durch die Kamera erhobenen Daten in der Rechnereinheit (beispielsweise durch Verfahren der Mustererkennung oder auch selbstlernende Systeme wie z.B. künstliche neuronale Netzwerke) können Informationen gesammelt werden, die für die Entscheidung, ob ein Pflanzenschutzmittel auf ein agrarwirtschaftliches Feld aufgetragen werden soll oder nicht, von Relevanz sein können.

Nach einem weiteren Beispiel umfasst das System weiter eine Pflanzenschutzmittelkontrolleinheit 70. Die Ausgabeeinheit ist konfiguriert, die Pflanzenschutzmittelkontrolleinheit zu aktivieren, wenn die Rechnereinheit ermittelt hat, dass ein Pflanzenschutzmittel auf das agrarwirtschaftliche Feld aufgebracht werden kann.

In einem Beispiel beschreibt die Pflanzenschutzmittelkontrolleinheit eine Sprüheinheit ggfs. als Bestandteil eines Gefährts oder montiert an einem Gefährt, welche konfiguriert ist, zumindest ein Pflanzenschutzmittel auf das agrarwirtschaftliche Feld aufzubringen. Diese Einheit kann dabei verschiedene Ausgestaltungsformen annehmen und beispielsweise ein Knapsack-Sprayer, Feldspritze, Anhängefeldspritze, selbstfahrende Feldspritze, Sprayroboter, Spraydrohne oder ein Sprayflugzeug etc. sein.

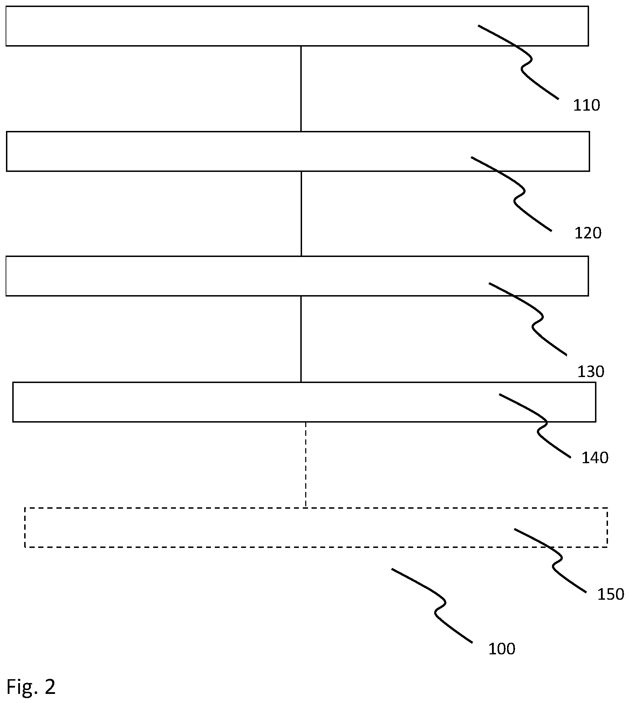

Figur 2 zeigt eine Methode 100 für das Pflanzenschutzmittel-Management auf einem agrarwirtschaftlichen Feld. Die Methode umfasst
in Schritt (a) das Erfassen 110 von gesundheitsbezogenen Daten von Bestäubern in der Nähe eines agrarwirtschaftlichen Feldes und/oder auf einem agrarwirtschaftlichen Feld mit zumindest einem Bestäuber-Sensor;
in Schritt (b) das Weiterleiten 120 der erfassten gesundheitsbezogenen Daten über die Empfangseinheit an die Rechnereinheit;
in Schritt (c) das Vergleichen 130 der gesundheitsbezogenen Daten der Bestäuber mit Referenzdaten durch die Rechnereinheit und dadurch ermitteln, ob ein Pflanzenschutzmittel auf das agrarwirtschaftliche Feld aufgebracht werden kann oder nicht,
in Schritt (d) das Anzeigen und/oder Ausgeben 140 einer Information von der Ausgabeeinheit bezüglich der von der Rechnereinheit ermittelten Information, ob ein Pflanzenschutzmittel auf das agrarwirtschaftliche Feld ausgebracht werden kann oder nicht und/oder Speichern dieser Information in einem Datenspeicher.

In einem Beispiel in Schritt (c) das Vergleichen 130 von gesundheitsbezogenen Daten der Bestäuber mit Referenzdaten, um den Gesundheitszustand der Bestäuber festzustellen und dadurch ermitteln, ob ein Pflanzenschutzmittel auf das agrarwirtschaftliche Feld aufgebracht werden kann oder nicht.

In einem Beispiel in Schritt (a) das Erfassen von gesundheitsbezogenen Daten von Bienen in der Nähe eines agrarwirtschaftlichen Feldes und/oder auf einem agrarwirtschaftlichen Feld mit zumindest einem Bestäuber-Sensor.

In einem Beispiel in einem Schritt vor Schritt (a) Anbringen zumindest eines Bestäuber-Sensors an einer Bienennisthöhle und/oder in einer Bienennisthöhle, wobei sich die Bienennisthöhle in der Nähe eines agrarwirtschaftlichen Feldes und/oder auf einem agrarwirtschaftlichen Feld befindet.

In einem Beispiel in Schritt (a) das Erfassen von gesundheitsbezogenen Daten von Bienen durch zumindest einen Bestäuber-Sensor, wobei die Daten ausgewählt sind aus der Gruppe von: Bruttemperatur, Luftfeuchtigkeit in der Bienennisthöhle, Gewicht der Bienen in der Bienennisthöhle, Bildanalyse der Brut, Bildanalyse des Flugverhaltens der Bienen, Bienenverkehr am Ein-/Ausgang der Bienennisthöhle, akustische Signale von Bienen, elektromagnetische Signale und Gase in der Bienennisthöhle.

In einem Beispiel in Schritt (a), das Erfassen von gesundheitsbezogenen Daten von Bienen wobei der zumindest eine Bestäuber-Sensor eine Kamera zumindest ein Bild von der Brut innerhalb einer Bienennisthöhle und/oder ein Bild des Ein-/Ausgangs der Bienennisthöhle erstellt.

In einem Beispiel in Schritt (a) bis (c), das Erfassen von gesundheitsbezogenen Daten von Bienen mit einer Kamera; das Weiterleiten von zumindest einem Bild über die Empfangseinheit an die Rechnereinheit und die Durchführung einer Bildanalyse von dem zumindest einen Bild durch die Rechnereinheit.

In einem Beispiel in Schritt (c), die Durchführung einer Bildanalyse durch Nutzen von zumindest einem Algorithmus für maschinelles Lernen.

In einem Beispiel in Schritt (a) bis (c) das Erfassen von umweltbezogene Daten in der Nähe und/oder auf einem agrarwirtschaftlichen Feld mit zumindest einem Umwelt-Sensor; das Weiterleiten der umweltbezogenen Daten über die Empfangseinheit zur Rechnereinheit; das Vergleichen von umweltbezogenen Daten zusammen mit gesundheitsbezogenen Daten der Bestäuber mit Referenzdaten und das Ermitteln, ob ein Pflanzenschutzmittel auf das agrarwirtschaftliche Feld aufgebracht werden kann oder nicht.

In einem Beispiel in Schritt (a) das Erfassen von umweltbezogenen Daten ausgewählt aus der Gruppe von: Wetterdaten und Wettervorhersagedaten in der Nähe des agrarwirtschaftlichen Feldes und/oder vom agrarwirtschaftlichen Feld, Informationen zum Wachstumsstadium und der Blühphase des sich in der Nähe und/oder auf dem agrarwirtschaftlichen Feld befindenden Pflanzenbestands, Schädlingsdruck und/oder Schädlingsbefall der auf dem agrarwirtschaftlichen Feld angepflanzten Nutzpflanzen, Krankheitsdruck und/oder Krankheitsbefall der auf dem agrarwirtschaftlichen Feld angepflanzten Nutzpflanzen, Unkrautdruck und/oder Befall auf dem agrarwirtschaftlichen Feld.

In einem Beispiel in Schritt (e) das Ausbringen 150 zumindest eines Pflanzenschutzmittels auf ein agrarwirtschaftliches Feld durch Aktivierung einer Pflanzenschutzmittelkontrolleinheit, wenn die Rechnereinheit ermittelt hat, dass ein Pflanzenschutzmittel auf das agrarwirtschaftliche Feld ausgebracht werden kann.

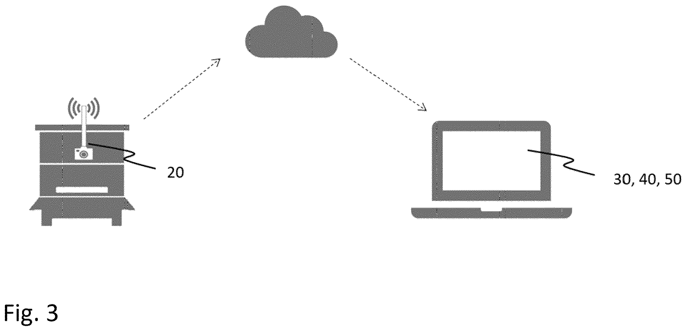

Figur 3 zeigt schematisch ein System für das Pflanzenschutzmittel-Management mit einer Bienennisthöhle. Auf der linken Seite ist eine Bienennisthöhle dargestellt, die einen Bestäuber-Sensor 20 (dargestellt als Kamera) umfasst und weiter über ein Funk-Netzwerk Informationen von dem Sensor über die in der Mitte dargestellte "Cloud" einem Rechner (dargestellt als Laptop; 30, 40, 50) zur Verfügung stellt. Die Rechnereinheit 40 ermittelt anhand der Sensordaten, ob ein Pflanzenschutzmittel auf ein agrarwirtschaftliches Feld aufgetragen werden kann oder nicht und zeigt diese Information über den Monitor (Ausgabeeinheit 50) an. Über die Empfangseinheit 30 kann die Anfrage, ob jetzt ein Pflanzenschutzmittel ausgebracht werden kann, gestartet werden.

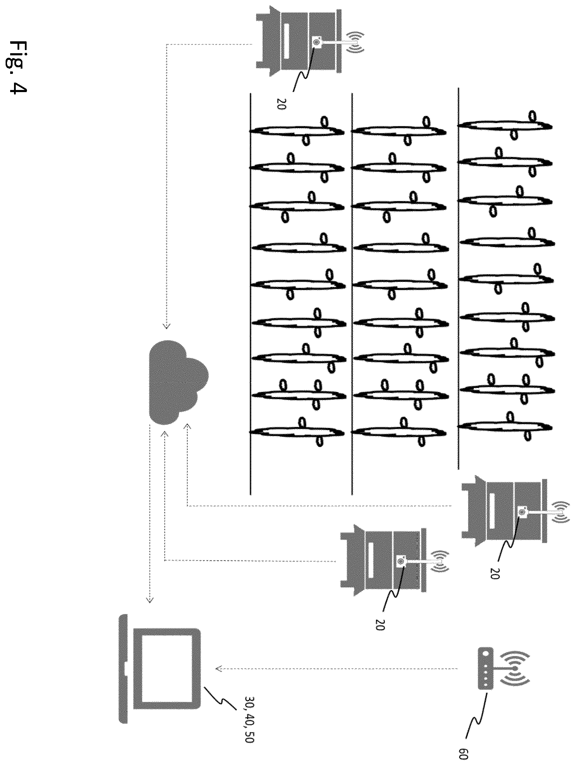

Figur 4 zeigt ein konkretes Beispiel des Systems mit einem agrarwirtschaftlichen Feld umgeben von drei Bienennisthöhlen. Das agrarwirtschaftliche Feld ist schematisch in der Mitte dargestellt (drei Linien, auf jeder Linie sind im rechten Winkel schematisch viele gleichartige Nutzpflanzen wie z.B. Mais dargestellt). Das System umfasst drei Bienennisthöhlen, die sich in unmittelbarer Nähe zum agrarwirtschaftlichen Feld befinden. Die Bienennisthöhlen umfassen einen oder mehrere Bestäuber-Sensor(en) 20 und senden die gesundheitsbezogenen Daten über das Funk-Netzwerk z.B. über die "Cloud" zu einem Rechner 30, 40, 50. Das System beinhaltet auch noch zusätzlich mindestens einen Umwelt-Sensor 60, der dem Rechner umweltbezogene Daten über das Funk-Netzwerk zur Verfügung stellt. Die Rechnereinheit 40 ermittelt anhand aller Sensordaten (gesundheitsbezogene Daten und umweltbezogene Daten) im Vergleich zu Referenzwerten, ob ein Pflanzenschutzmittel auf ein agrarwirtschaftliches Feld aufgetragen werden kann oder nicht, und zeigt diese Information über den Monitor (Ausgabeeinheit 50) an. Über die Empfangseinheit 30 kann die Anfrage, ob jetzt ein Pflanzenschutzmittel ausgebracht werden kann, gestartet werden.

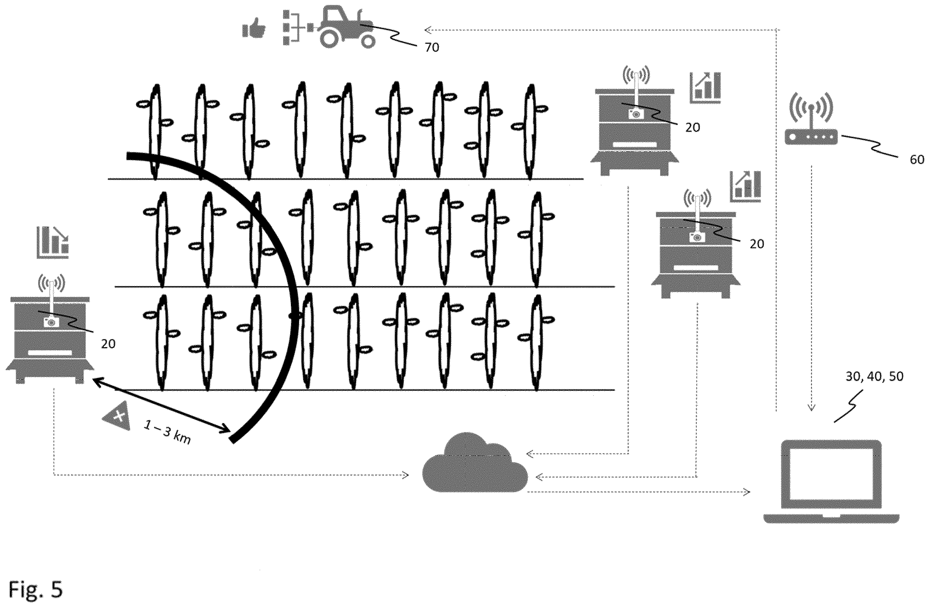

Figur 5 zeigt ein konkretes Beispiel der Entscheidungsfindung des Systems bzgl. eines agrarwirtschaftlichen Feldes. Das System besteht aus den gleichen Komponenten wie in Figur 4 bereits dargestellt wurde, jedoch mit der Ergänzung einer Pflanzenschutzmittelkontrolleinheit 70, die die Entscheidung der Rechnereinheit 40, ob gesprüht werden kann oder nicht, umsetzt. Die Pflanzenschutzmittelkontrolleinheit 70 ist in diesem Beispiel eine Anhänge-Feldspritze, die an einen Traktor montiert ist und über die Ausgabeeinheit 50 und das Funk-Netzwerk wie z.B. über die Cloud aktiviert wird, sobald die Rechnereinheit 40 eine entsprechende Entscheidung gefällt hat, dass das Aufbringen von Pflanzenschutzmitteln möglich ist. In diesem Beispiel wurde durch Vergleich mit Referenzdaten von der Rechnereinheit 40 festgestellt, dass die gesundheitsbezogenen Daten der Bienenvölker in den beiden Bienennisthöhlen auf der rechten Seite in Ordnung sind und dass die gesundheitsbezogenen Daten des Bienenvolkes in der linken Bienennisthöhle nicht optimal sind. Die Rechnereinheit entscheidet, dass eine Applikation von zumindest einem Pflanzenschutzmittel über die Anhänge-Feldspritze bei Einhaltung eines Sicherheitsabstandes von 1 bis 3 km zu der linken Bienennisthöhle möglich ist und aktiviert entsprechend die Pflanzenschutzmittelkontrolleinheit.

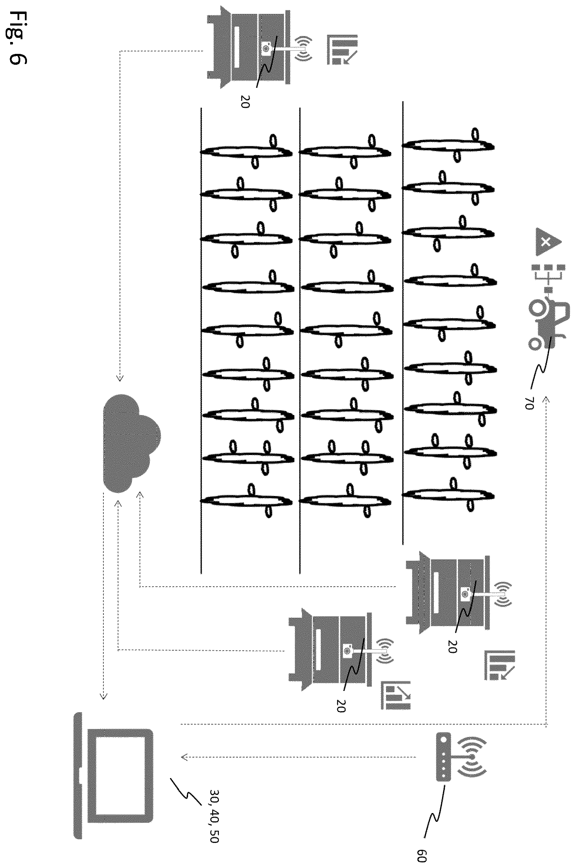

Figur 6 zeigt ein weiteres konkretes Beispiel der Entscheidungsfindung des Systems, welches in Figur 5 schon beschrieben wurde, mit dem Unterschied, dass bei diesem System die gesundheitsbezogenen Daten im Vergleich zu Referenzdaten von der rechten, oberen Bienennisthöhle ebenfalls auf ein gesundheitlich angeschlagenes Bienenvolk hinweisen. Die umweltbezogenen Daten von dem Umwelt-Sensor 60 deuten darauf hin, dass im agrarwirtschaftlichen Feld kein Schädlingsbefall und auch nur geringer Schädlingsdruck vorhanden ist. Die Rechnereinheit 40 entscheidet daher, dass auf Grund der Tatsache, dass die Mehrheit der Bienenvölker einen nicht optimalen Gesundheitszustand aufweist und kein Schädlingsbefall bzw. ein geringer Schädlingsdruck besteht, kein Pflanzenschutzmittel auf das agrarwirtschaftliche Feld aufgetragen werden soll.

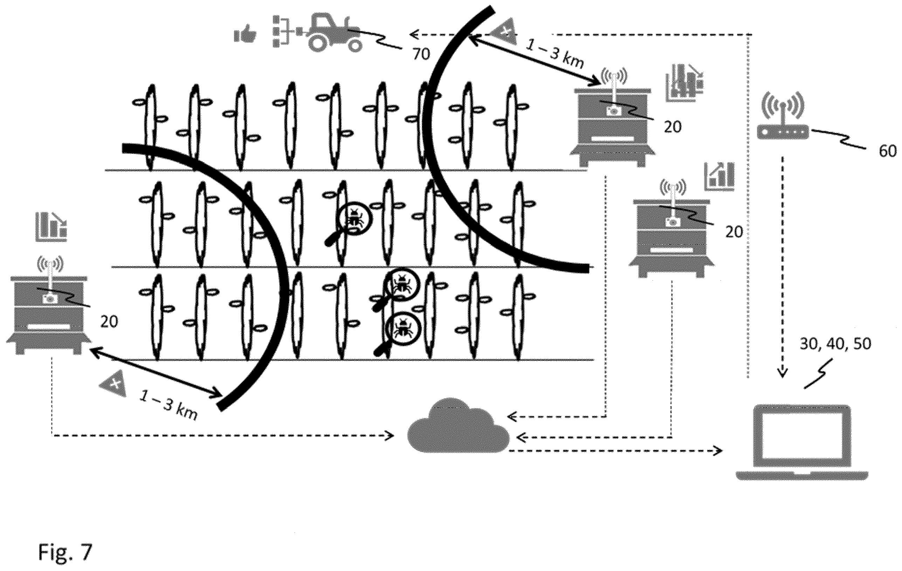

Figur 7 zeigt ein weiteres konkretes Beispiel der Entscheidungsfindung des gleichen Systems wie in Figur 6 gezeigt, mit dem Unterschied, dass die umweltbezogenen Daten von dem Umwelt-Sensor 60 darauf hindeuten, dass im agrarwirtschaftlichen Feld ein Schädlingsbefall und auch ein hoher Schädlingsdruck besteht. Aufgrund dieser Ausgangslage entscheidet die Rechnereinheit 40, dass eine Applikation von zumindest einem Pflanzenschutzmittel über die Anhänge-Feldspritze bei Einhaltung eines Sicherheitsabstandes von 1 bis 3 km zu der linken Bienennisthöhle und zu der rechten, oberen Bienennisthöhle möglich ist und aktiviert entsprechend die Pflanzenschutzmittelkontrolleinheit.

Weitere Ausführungsformen der Erfindung betreffen ein Computerprogrammprodukt zur Steuerung des oben beschriebenen Systems, das bei Ausführung durch einen Prozessor so konfiguriert ist, die oben beschriebene Methode auszuführen. Eine weitere Ausführungsform betrifft ein Speichermedium welches das Computerprogrammprodukt gespeichert hat.

Die Erfindung ist erläutert, ohne zwischen den Erfindungsgegenständen (System, Verfahren, Computerprogrammprodukt, Speichermedium) wesentlich zu unterscheiden. Die Erläuterungen sollen vielmehr für alle Erfindungsgegenstände in analoger Weise gelten, unabhängig davon, in welchem Kontext sie erfolgen.

Wenn in der vorliegenden Beschreibung oder in den Patentansprüchen Schritte in einer Reihenfolge genannt sind, bedeutet dies nicht zwingend, dass die Erfindung auf die genannte Reihenfolge beschränkt ist. Vielmehr ist denkbar, dass die Schritte auch in einer anderen Reihenfolge oder auch parallel zueinander ausgeführt werden; es sei denn, ein Schritt baut auf einem anderen Schritt auf, was zwingend erforderlich macht, dass der aufbauende Schritt nachfolgend ausgeführt wird (was im Einzelfall aber deutlich wird). Die genannten Reihenfolgen stellen damit bevorzugte Ausführungsformen der Erfindung dar.

## Patentansprüche

1. Ein System (10) für das Pflanzenschutzmittel-Management auf einem agrarwirtschaftlichen Feld umfassend:
- zumindest einen Bestäuber-Sensor (20) konfiguriert um gesundheitsbezogene Daten von Bestäubern in der Nähe des agrarwirtschaftlichen Feldes und/oder auf dem agrarwirtschaftlichen Feld zu erfassen,
- eine Empfangseinheit (30)
- eine Rechnereinheit (40); und
- eine Ausgabeeinheit (50);
wobei, der zumindest eine Bestäuber-Sensor konfiguriert ist, die gesundheitsbezogenen Daten der Bestäuber über die Empfangseinheit der Rechnereinheit zur Verfügung zu stellen,
wobei, die Rechnereinheit konfiguriert ist, die gesundheitsbezogenen Daten der Bestäuber mit Referenzdaten zu vergleichen und dadurch zu ermitteln, ob ein Pflanzenschutzmittel auf das agrarwirtschaftliche Feld aufgebracht werden kann oder nicht,
wobei, die Ausgabeeinheit konfiguriert ist, zumindest die Information von der Rechnereinheit bezüglich der Ermittlung, ob ein Pflanzenschutzmittel auf das agrarwirtschaftliche Feld ausgebracht werden kann oder nicht, anzuzeigen, auszugeben oder in einem Datenspeicher zu speichern.

2. Ein System gemäß Anspruch 1, wobei die Rechnereinheit konfiguriert ist, anhand der erfassten gesundheitsbezogenen Daten der Bestäuber und Referenzdaten den Gesundheitszustand der Bestäuber festzustellen und dadurch zu ermitteln, ob ein Pflanzenschutzmittel auf das agrarwirtschaftliche Feld aufgebracht werden kann oder nicht.

3. Ein System nach einem der vorherigen Ansprüche, wobei die Bestäuber Bienen sind.

4. Ein System nach Anspruch 3, wobei der zumindest eine Bestäuber-Sensor an einer Bienennisthöhle angebracht ist und/oder in einer Bienennisthöhle vorliegt und sich die Bienennisthöhle in der Nähe des agrarwirtschaftlichen Feldes und/oder auf dem agrarwirtschaftlichen Feld befindet.

5. Ein System nach einem der Ansprüche 3 oder 4, wobei die durch den zumindest einen Bestäuber-Sensor ermittelten gesundheitsbezogenen Daten ausgewählt sind aus der Gruppe von: Bruttemperatur, Luftfeuchtigkeit in der Bienennisthöhle, Gewicht der Bienen in der Bienennisthöhle, Bildanalyse der Brut, Bildanalyse des Flugverhaltens der Bienen, Bienenverkehr am Ein-/Ausgang der Bienennisthöhle, akustische Signale von Bienen, elektromagnetische Signale und Gase in der Bienennisthöhle.

6. Ein System nach Anspruch 5, wobei der zumindest eine Bestäuber-Sensor eine Kamera ist, konfiguriert zumindest ein Bild von der Brut innerhalb der Bienennisthöhle und/oder ein Bild des Ein-/Ausgangs der Bienennisthöhle zu erstellen.

7. Ein System nach Anspruch 6, wobei zumindest ein Bild der über die Empfangseinheit der Rechnereinheit zur Verfügung gestellt wird und die Rechnereinheit konfiguriert ist, eine Bildanalyse von dem zumindest einen Bild durchzuführen.

8. Ein System nach Anspruch 7, wobei die Bildanalyse die Nutzung von zumindest einem Algorithmus für maschinelles Lernen umfasst.

9. Ein System nach einem der vorherigen Ansprüche, wobei das System weiter zumindest
einen Umwelt-Sensor (60) umfasst, der konfiguriert ist, umweltbezogene Daten in der Nähe und/oder auf einem agrarwirtschaftlichen Feld zu erfassen,
wobei der zumindest eine Umwelt-Sensor konfiguriert ist, die umweltbezogenen Daten über die Empfangseinheit der Rechnereinheit zur Verfügung zu stellen,
wobei die Rechnereinheit konfiguriert ist, die umweltbezogenen Daten zusammen mit den gesundheitsbezogenen Daten der Bestäuber mit Referenzdaten zu vergleichen und dadurch zu ermitteln, ob ein Pflanzenschutzmittel auf das agrarwirtschaftliche Feld aufgebracht werden kann oder nicht.

10. Ein System nach Anspruch 9, wobei die durch den zumindest einen Umwelt-Sensor ermittelten umweltbezogenen Daten ausgewählt sind aus der Gruppe von: Wetterdaten und Wettervorhersagedaten in der Nähe des agrarwirtschaftlichen Feldes und/oder vom agrarwirtschaftlichen Feld, Informationen zum Wachstumsstadium und der Blühphase des sich in der Nähe und/oder auf dem agrarwirtschaftlichen Feld befindenden Pflanzenbestands, Schädlingsdruck und/oder Schädlingsbefall der auf dem agrarwirtschaftlichen Feld angepflanzten Nutzpflanzen, Krankheitsdruck und/oder Krankheitsbefall der auf dem agrarwirtschaftlichen Feld angepflanzten Nutzpflanzen, Unkrautdruck und/oder Befall auf dem agrarwirtschaftlichen Feld.

11. Ein System nach einem der vorherigen Ansprüche, weiter umfassend
- eine Pflanzenschutzmittelkontrolleinheit (70),
wobei die Ausgabeeinheit konfiguriert ist, die Pflanzenschutzmittelkontrolleinheit zu aktivieren, wenn die Rechnereinheit ermittelt hat, dass ein Pflanzenschutzmittel auf das agrarwirtschaftliche Feld ausgebracht werden kann.

12. Eine Methode (100) für das Pflanzenschutzmittel-Management auf einem agrarwirtschaftlichen Feld umfassend:
(a) Erfassen (110) von gesundheitsbezogenen Daten von Bestäubern in der Nähe des agrarwirtschaftlichen Feldes und/oder auf dem agrarwirtschaftlichen Feld mit zumindest einem Bestäuber-Sensor;
(b) Weiterleiten (120) der erfassten gesundheitsbezogenen Daten über eine Empfangseinheit an eine Rechnereinheit;
(c) Vergleichen (130) der gesundheitsbezogenen Daten der Bestäuber mit Referenzdaten durch die Rechnereinheit und dadurch Ermitteln, ob ein Pflanzenschutzmittel auf das agrarwirtschaftliche Feld aufgebracht werden kann oder nicht,
(d) Anzeigen und/oder Ausgeben (140) einer Information von einer Ausgabeeinheit bezüglich der von der Rechnereinheit ermittelten Information, ob ein Pflanzenschutzmittel auf das agrarwirtschaftliche Feld ausgebracht werden kann oder nicht und/oder Speichern dieser Information in einem Datenspeicher.

13. Ein Computerprogrammprodukt zur Steuerung von einem System nach einem der Ansprüche 1 bis 11, das bei Ausführung durch einen Prozessor so konfiguriert ist, die Methode nach Anspruch 12 auszuführen.

14. Ein Speichermedium welches das Computerprogrammprodukt nach Anspruch 13 gespeichert hat.

## Claims

1. System (10) for plant protection product management on an agricultural field, comprising:
- at least one pollinator sensor (20) configured to collect health-related data of pollinators in the vicinity of the agricultural field and/or on the agricultural field,
- a receiving unit (30)
- a computing unit (40); and
- an output unit (50);
wherein the at least one pollinator sensor is configured to make the health-related data of the pollinators available to the computing unit via the receiving unit,
wherein the computing unit is configured to compare the health-related data of the pollinators with reference data and thereby ascertain whether or not a plant protection product can be applied to the agricultural field,
wherein the output unit is configured to display, output or store in a data storage medium at least the information from the computing unit relating to the ascertainment of whether or not a plant protection product can be applied to the agricultural field.

2. System according to Claim 1, wherein the computing unit is configured to use the collected health-related data of the pollinators and reference data to establish the state of health of the pollinators and thereby ascertain whether or not a plant protection product can be applied to the agricultural field.

3. System according to either of the preceding claims, wherein the pollinators are bees.

4. System according to Claim 3, wherein the at least one pollinator sensor is installed on a bee nesting site and/or is present in a bee nesting site, and the bee nesting site is located in the vicinity of the agricultural field and/or on the agricultural field.

5. System according to either of Claims 3 and 4, wherein the health-related data ascertained by the at least one pollinator sensor are selected from the group of: brood temperature, air humidity in the bee nesting site, weight of the bees in the bee nesting site, image analysis of the brood, image analysis of the flight behaviour of the bees, bee traffic at the entrance/exit of the bee nesting site, acoustic signals of bees, electromagnetic signals and gases in the bee nesting site.

6. System according to Claim 5, wherein the at least one pollinator sensor is a camera configured to create at least one image of the brood within the bee nesting site and/or one image of the entrance/exit of the bee nesting site.

7. System according to Claim 6, wherein at least one image is made available to the computing unit via the receiving unit, and the computing unit is configured to carry out an image analysis of the at least one image.

8. System according to Claim 7, wherein the image analysis comprises using at least one machine learning algorithm.

9. System according to any of the preceding claims, wherein the system further comprises at least one environmental sensor (60) configured to collect environmental data in the vicinity of and/or on an agricultural field,
wherein the at least one environmental sensor is configured to make the environmental data available to the computing unit via the receiving unit,
wherein the computing unit is configured to compare the environmental data together with the health-related data of the pollinators with reference data and thereby ascertain whether or not a plant protection product can be applied to the agricultural field.

10. System according to Claim 9, wherein the environmental data ascertained by the at least one environmental sensor are selected from the group of: weather data and weather forecast data in the vicinity of the agricultural field and/or of the agricultural field, information relating to the growth stage and flowering phase of the plant population present in the vicinity of and/or on the agricultural field, pest pressure and/or pest infestation of the useful plants cultivated on the agricultural field, disease pressure and/or disease infestation of the useful plants cultivated on the agricultural field, weed pressure and/or infestation on the agricultural field.

11. System according to any of the preceding claims, further comprising
- a plant protection product control unit (70),
wherein the output unit is configured to activate the plant protection product control unit when the computing unit has ascertained that a plant protection product can be applied to the agricultural field.

12. Method (100) for plant protection product management on an agricultural field, comprising:
(a) collecting (110) health-related data of pollinators in the vicinity of the agricultural field and/or on the agricultural field by means of at least one pollinator sensor;
(b) forwarding (120) the collected health-related data to a computing unit via a receiving unit;
(c) comparing (130) the health-related data of the pollinators with reference data by means of the computing unit and thereby ascertaining whether or not a plant protection product can be applied to the agricultural field,
(d) displaying and/or outputting (140) an item of information by an output unit relating to the information ascertained by the computing unit as to whether or not a plant protection product can be applied to the agricultural field and/or storing said item of information in a data storage medium.

13. Computer program product for control of a system according to any of Claims 1 to 11, which, upon execution by a processor, is configured to carry out the method according to Claim 12.

14. Storage medium which has stored the computer program product according to Claim 13.

## Revendications

1. Système (10) de gestion des produits phytosanitaires dans un champ agricole, comprenant :
- au moins un capteur de pollinisateurs (20) configuré pour acquérir des données relatives à la santé des pollinisateurs à proximité du champ agricole et/ou au sein du champ agricole,
- une unité de réception (30),
- une unité de calcul (40) ; et
- une unité de fourniture en sortie (50) ;
dans lequel ledit au moins un capteur de pollinisateurs est configuré pour fournir les données relatives à la santé des pollinisateurs à l'unité de calcul par l'intermédiaire de l'unité de réception,
dans lequel l'unité de calcul est configurée pour comparer les données relatives à la santé des pollinisateurs à des données de référence et déterminer ainsi si un produit phytosanitaire peut ou non être appliqué sur le champ agricole,
dans lequel l'unité de fourniture en sortie est configurée pour afficher, fournir en sortie ou stocker dans une mémoire de données au moins l'information provenant de l'unité de calcul et relative à la détermination indiquant si un produit phytosanitaire peut ou non être appliqué sur le champ agricole.

2. Système selon la revendication 1, dans lequel l'unité de calcul est configurée pour déterminer l'état de santé des pollinisateurs au moyen des données relatives à la santé des pollinisateurs et des données de référence détectées, et pour déterminer ainsi si un produit phytosanitaire peut ou non être appliqué sur le champ agricole.

3. Système selon l'une quelconque des revendications précédentes, dans lequel les pollinisateurs sont des abeilles.

4. Système selon la revendication 3, dans lequel ledit au moins un capteur de pollinisateurs est fixé à un nid d'abeilles et/ou est présent dans un nid d'abeilles, et ledit nid d'abeille est situé à proximité dudit champ agricole et/ou dans ledit champ agricole.

5. Système selon l'une quelconque des revendications 3 ou 4, dans lequel les données relatives à la santé déterminées par ledit au moins un capteur de pollinisateurs sont choisies dans le groupe constitué par : la température du couvain, l'humidité de l'air dans le nid d'abeilles, le poids des abeilles dans le nid d'abeilles, l'analyse d'image du couvain, l'analyse d'image du comportement en vol des abeilles, le trafic des abeilles à l'entrée/sortie du nid d'abeilles, des signaux acoustiques des abeilles, des signaux électromagnétiques et des gaz dans le nid d'abeilles.

6. Système selon la revendication 5, dans lequel ledit au moins un capteur de pollinisateurs est une caméra configurée pour produire au moins une image du couvain à l'intérieur du nid d'abeilles et/ou une image de l'entrée/sortie du nid d'abeilles.

7. Système selon la revendication 6, dans lequel au moins une image est fournie à l'unité de calcul par l'intermédiaire de l'unité de réception, et l'unité de calcul est configurée pour effectuer une analyse d'image à partir de ladite au moins une image.

8. Système selon la revendication 7, dans lequel l'analyse d'image comprend l'utilisation d'au moins un algorithme d'apprentissage automatique.

9. Système selon l'une quelconque des revendications précédentes, dans lequel le système comprend en outre au moins un capteur d'environnement (60) configuré pour détecter des données relatives à l'environnement à proximité et/ou au sein d'un champ agricole,
dans lequel ledit au moins un capteur d'environnement est configuré pour fournir les données relatives à l'environnement à l'unité de calcul par l'intermédiaire de l'unité de réception, dans lequel l'unité de calcul est configurée pour comparer les données relatives à l'environnement, en association avec les données relatives à la santé des pollinisateurs, à des données de référence et pour déterminer ainsi si un produit phytosanitaire peut ou non être appliqué sur le champ agricole.

10. Système selon la revendication 9, dans lequel les données relatives à l'environnement déterminées par ledit au moins un capteur d'environnement sont choisies dans le groupe constitué par : des données météorologiques et des données de prévision météorologique à proximité du champ agricole et/ou provenant du champ agricole, des informations relatives au stade de croissance et à la phase de floraison de la végétation située à proximité et/ou au sein du champ agricole, la pression parasitaire et/ou l'infestation parasitaire des plantes cultivées dans le champ agricole, la pression des maladies et/ou l'infestation par des maladies des plantes cultivées dans le champ agricole, la pression des mauvaises herbes et/ou l'infestation dans le champ agricole.

11. Système selon l'une quelconque des revendications précédentes, comprenant en outre
- une unité de contrôle des produits phytosanitaires (70),
dans lequel l'unité de fourniture en sortie est configurée pour activer l'unité de contrôle des produits phytosanitaires lorsque l'unité de calcul a déterminé qu'un produit phytosanitaire pouvait être appliqué sur le champ agricole.

12. Procédé (100) de gestion des produits phytosanitaires dans un champ agricole, comprenant :
(a) l'acquisition (110) de données relatives à la santé des pollinisateurs à proximité du champ agricole et/ou au sein du champ agricole à l'aide d'au moins un capteur de pollinisateurs ;
(b) la transmission (120) des données relatives à la santé acquises par l'intermédiaire d'une unité de réception à une unité de calcul ;
(c) la comparaison (130) par l'unité de calcul des données relatives à la santé des pollinisateurs à des données de référence pour ainsi déterminer si un produit phytosanitaire peut ou non être appliqué sur le champ agricole,
(d) l'affichage et/ou la fourniture en sortie (140) d'une information provenant d'une unité de fourniture en sortie et relative à l'information déterminée par l'unité de calcul, indiquant si un produit phytosanitaire peut ou non être appliqué sur le champ agricole, et/ou le stockage de ladite information dans une mémoire de données.

13. Produit de programme d'ordinateur destiné à commander un système selon l'une quelconque des revendications 1 à 11 qui, lorsqu'il est exécuté par un processeur, est configuré pour mettre en œuvre le procédé selon la revendication 12.

14. Support de stockage sur lequel est stocké le produit de programme d'ordinateur selon la revendication 13.
